(19) Europäisches Patentamt
European Patent Office
Office européen des brevets

(11) Veröffentlichungsnummer: **0 329 043 B1**

(12) **EUROPÄISCHE PATENTSCHRIFT**

(45) Veröffentlichungstag der Patentschrift: **05.01.94**

(51) Int. Cl.[5]: **C07F 15/00**, C07F 9/32

(21) Anmeldenummer: **89102381.4**

(22) Anmeldetag: **11.02.89**

(54) **Optisch aktive Rhodiumkomplexe von 3,4-Bis(diarylphosphino)-pyrrolidinen und ihre Verwendung zur Herstellung von Phosphinothricin durch asymmetrische Hydrierung.**

(30) Priorität: **19.02.88 DE 3805151**
**31.05.88 DE 3818435**

(43) Veröffentlichungstag der Anmeldung:
**23.08.89 Patentblatt 89/34**

(45) Bekanntmachung des Hinweises auf die Patenterteilung:
**05.01.94 Patentblatt 94/01**

(84) Benannte Vertragsstaaten:
**AT BE CH DE ES FR GB IT LI NL**

(56) Entgegenhaltungen:
**EP-A- 0 238 954**

**JOURNAL OF MOLECULAR CATALYSIS, Band 24, 1984, Seiten 231-233, Elsevier Sequoia, Lausanne, CH; Y. AMRANI et al.: "Synthesis and application in enantioselective hydrogenation of a rhodium complex of an asymmetric water-soluble diphosphine PGE-17-DIOP"**

**JOURNAL OF MOLECULAR CATALYSIS, Band 36, 1986, Seiten 319-327, Elsevier Sequoia, Lausanne, CH; D. SINOU et al.: "Asymmetric water-soluble diphosphines: synthesis and use in hydrogenation as their rhodium complexes of polyoxadiphosphines"**

**CHEMISCHE BERICHTE, Band 119, November 1986, Seiten 3326-3343, VCH Verlagsgesellschaft mbH, Weinheim, DE; U. NAGEL et al.: "Synthese N-substituierter (R,R)-3,4-Bis(diphenylphosphino)-pyrrolidine und Anwendung ihrer Rhodiumkomplexe zur asymmetrischen Hydrierung von alpha-(Acylamino)acrylsäure-Derivaten"**

(73) Patentinhaber: **HOECHST AKTIENGESELLSCHAFT**

**D-65926 Frankfurt(DE)**

(72) Erfinder: **Müller, Wolf-Dieter, Dr.**
**Wacholderweg 2**
**D-6238 Hofheim am Taunus(DE)**
Erfinder: **Kleiner, Hans-Jerg, Dr.**
**Altkönigstrasse 11a**
**D-6242 Kronberg/Taunus(DE)**

EP 0 329 043 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue optisch aktive Rhodiumkomplexe der allgemeinen Formel

$[A - O - (CH_2CH_2O)_n - A]^{2+}\ 2\ X^-$ Ia

und

$[A - O - (CH_2CH_2O)_m - CH_3]^+\ X^-$ Ib

worin

- n = 5-1000,
- m = 5 - 250,
- $X^-$ ein Tetrafluoroborat-, Hexafluorophosphat- oder Perchloratanion,
- A einen Rest der Formel

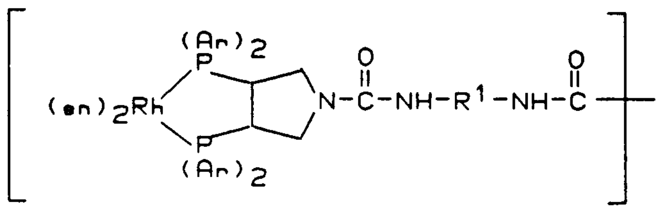

II

- $(en)_2$ zwei Moleküle eines Monoolefins oder ein Molekül eines Diolefins
- Ar Phenyl oder durch ein oder zwei Alkylgruppen mit 1 bis 2 Kohlenstoffatomen substituiertes Phenyl und
- $R^1$ eine Arylen- oder Alkylenbrücke

bedeuten.

Gegenstand der Erfindung ist weiterhin die Verwendung der Katalysatoren für die Herstellung von L-Homoalanin-4-yl-(methyl)phosphinsäure (L-Phosphinothricin, L-Ptc) und ihrer Derivate durch enantioselektive katalytische Hydrierung von 2,3-Dehydro-phosphinothricin(derivaten).
Phosphinothricin (Ptc) der Formel

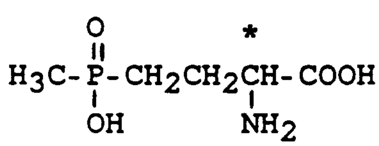

III,

sowie seine Ester und Salze sind aus der DE-PS 27 17 440 (US-A-4,168,963) bekannt als wirksame Herbizide. Infolge des (mit Sternchen gekennzeichneten) asymmetrischen C-Atoms tritt es in zwei enantiomeren Formen auf, von denen die L-Form der Träger der physiologischen Wirksamkeit ist (DE-OS 28 56 260, GB-A-2,011,416).

Es ist bereits bekannt, daß man L-Ptc und seine Derivate durch enantioselektive (asymmetrische) Hydrierung von 2,3-Dehydro-phosphinothricinderivaten der Formel

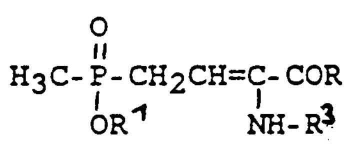

IV

worin

- R Hydroxy, $(C_1\text{-}C_6)$Alkoxy, Ala-Ala(OH) oder Ala-Leu(OH)

$R^1$ H oder $(C_1-C_6)$Alkyl, und
$R^3$ einen Acyl-, Alkoxy- oder Aryloxycarbonylrest bedeutet,
mittels Rhodiumkatalysatoren und anschließende Abspaltung des Acyl- oder Carbonesterrests herstellen kann (DE-OS 36 09 818, ZA 87/2058). Die Wirtschaftlichkeit des Verfahrens bei der Durchführung im technischen Maßstab, hängt jedoch von einer Reihe von Bedingungen ab, die von den in DE-OS 36 09 818 beschriebenen Katalysatoren nur mangelhaft erfüllt werden.

Aus Chem. Ber. 119, 3326 (1986) weiß man, daß die Löslichkeit des Rh-Katalysators im gewählten Lösungsmittel Voraussetzung für die Hydrierung ist und daß die Umsatzrate (Mol Substrat pro Mol Katalysator pro Zeiteinheit) von einer katalysatorspezifischen Mindestkonzentration an Katalysator abhängt. Wird diese Mindestkonzentration unterschritten, so nimmt die Umsatzrate rasch ab.

Wegen der hohen Kosten der Rh-Katalysatoren hängt die Wirtschaftlichkeit des Hydrierungsverfahrens auch vom Mengenverhältnis Substrat : Katalysator ab. Es versteht sich, daß das Verfahren umso kostengünstiger durchgeführt werden kann je weniger Katalysator benötigt wird, d.h. je höher die Konzentration des zu hydrierenden Substrats bezogen auf die notwendige Mindestkonzentration des Katalysators ist. Dieses Verhältnis wird entscheidend durch das verwendete Lösungsmittel beeinflußt.

Da 2,3-Dehydro-phosphinothricin und seine Derivate besonders gut in Wasser löslich sind, liegt es nahe, für ein wirtschaftliches Hydrierungsverfahren Wasser als Medium zu wählen. Die aus DE-OS 36 09 818 bekannten Rh-Katalysatoren lösen sich jedoch in Wasser nicht ausreichend, so daß die erforderliche Mindestkonzentration nicht erreicht wird. In organischen Lösungsmitteln wie Methanol ist dagegen das Substrat (2,3-Dehydro-phosphinothricin) nicht optimal löslich, so daß das Mengenverhältnis Substrat/Katalysator ungünstig ist.

Die Aufgabe bestand somit darin, Rhodium-Katalysatoren mit guter Wasserlöslichkeit zu finden, die es gestatten, das in Wasser gleichfalls gut lösliche 2,3-Dehydrophosphinothricin bei einem großen, d.h. für ein wirtschaftliches Verfahren geeigneten Mengenverhältnis Substrat : Katalysator zu hydrieren. Durch die erfindungsgemäßen Katalysatoren der Formel I wird diese Aufgabe gelöst.

Man erhält sie, indem man ein Polyglykol der Formel $HO-(CH_2CH_2O)_n-H$ oder einen Polyglykolmonomethylether der Formel $HO-(CH_2CH_2O)_m-CH_3$ mit einem Diisocyanat der Formel $R_1(N=C=O)_2$ umsetzt, das erhaltene Additionsprodukt mit einem 3,4 Bis(diarylphosphino)pyrrolidin der Formel

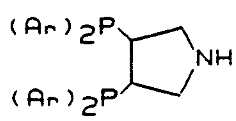

V

derivatisiert und das Reaktionsprodukt mit einem Rhodiumkomplex der Formel

$[Rh(en)_2Y]_2$ VI

(Y = Cl, Br oder J)
und einem Alkalimetall- oder Silbersalz der Tetrafluoroborsäure, Hexafluorophosphorsäure oder Perchlorsäure umsetzt.

Bei dem oben beschriebenen Verfahren zur Herstellung der erfindungsgemäßen Katalysatoren der allgemeinen Formeln Ia und Ib können die einzelnen Komponenten in stöchiometrischen Mengen eingesetzt werden. Zweckmäßigerweise setzt man jedoch bei der angegebenen Reaktionsfolge die jeweils neu zuzugebende Komponente in stöchiometrischem Unterschuß, bevorzugt von 5 - 20 Mol-% ein. Hierdurch soll erreicht werden, daß alle neuen Komponenten möglichst quantitativ mit dem fortschreitend immer höher funktionalisierten Polyglykol bzw. Polyglykolmonomethylether abreagieren. Dabei ist es weiterhin zweckmäßig, vor Zugabe der Rhodium-Komponente noch im Reaktionsgemisch vorhandene Isocyanat-Gruppen durch Zusatz eines Alkohols wie Ethanol oder Methanol abreagieren zu lassen. Man erhält auf diese Weise die erfindungsgemäßen Katalysatoren der Formeln Ia und Ib naturgemäß nicht als Reinsubstanzen, sondern im Gemisch mit Verbindungen, die sich von den allgemeinen Formeln Ia und Ib dadurch ableiten, daß im Fall der Verbindungen der Formeln Ia und Ib ein Rest der allgemeinen Formel II, im Fall der Verbindungen der Formel Ia auch zwei Reste der allgemeinen Formel II nicht vollständig aufgebaut sind.

Um einen direkten Vergleich der Hydrieraktivität der so erhaltenen Katalysatoren mit literaturbekannten niedermolekularen, einheitlichen Katalysatoren zu ermöglichen, charakterisiert man sie zweckmäßig anhand eines auf Rhodium bezogenen mittleren Molekulargewichtes, das sich leicht aus der Menge des bei der

Synthese zugegebenen Rhodium-Komplexes der Formel VI errechnen läßt. In den Ausgangs- und Endprodukten haben die einzelnen Reste und Substituenten folgende Bedeutung.

"en" ist ein geradkettiges, verzweigtes oder ringförmiges Mono- oder Diolefin, z.B. Ethylen, 2-Buten, Butadien, Isopren, Cyclohexen, Cycloocten, 1,5-Cyclooctadien oder Norbornadien.

Die Natur des Restes $R^1$ ergibt sich aus der Struktur des eingesetzten Diisocyanates, wofür handelsübliche Di-isocyanate in Frage kommen. Beispiele hierfür sind Hexamethylendiisocyanat, Isophorondiisocyanat, Diphenylmethandiisocyanat oder 2,4-Toluylendiisocyanat. Besonders geeignet sind Diisocyanate mit abgestufter Reaktivität der einzelnen Isocyanatgruppen, wie z.B. 2,4-Toluylendiisocyanat.

Geeignete Polyethylenglykole sind solche mit 5 - 1000 EO-Einheiten (Ethylenoxy-Einheiten), entsprechend einem mittleren Molekulargewicht von etwa 250 bis 45000. Bevorzugt sind n von 50 - 250, entsprechend einem Molekulargewicht von 2000 bis ca. 11000. Geeignete Polyethylenglykolmonomethylether enthalten 5 - 250 EtO-Einheiten, entsprechend Molekulargewichten von etwa 250 bis 11000; bevorzugt sind m von 50 bis 150 ≙ MG ~ 2000 bis 6000.

Die optisch aktiven 3,4-Bis(diarylphosphino)pyrrolidine der allgemeinen Formel V in denen "Ar" die bereits angegebene Bedeutung hat, sind in Chem. Ber. 113, 3426 (1986) oder EP-OS 151 282 (US-A-4,634,775) beschrieben oder können nach dem dort angegebenen Verfahren durch Umsetzung von optisch aktivem 3,4-Dimethansulfonylpyrrolidiniumbromid oder -acetat mit einem Alkalimetall-diarylphosphid hergestellt werden. Geht man bei diesen mehrstufigen Synthesen von (+)-Weinsäure aus, so erhält man letztlich die (R,R)-3,4-Bis(diarylphosphino)pyrrolidine.

Die Rhodiumkomplexe der Formel IV sind ebenfalls literaturbekannt (z.B. JACS 93, 3059 (1971)) oder können analog dem dort angegebenen Verfahren hergestellt werden; teilweise sind sie sogar im Handel erhältlich.

Die Rhodiumkomplexe der Formel I, in denen $(en)_2$ ein Molekül 1,5-Cyclooctadien und $X^-$ ein Tetrafluoroboratanion bedeuten, können auf besonders einfache Weise auch dadurch hergestellt werden, daß man die derivatisierten 3,4-Bis(diarylphosphino)pyrrolidine direkt mit einem Rhodiumkomplex der Formel

$[Rh(COD)_2]^+ BF_4^-$ VII

in der COD für 1,5-Cyclooctadien steht, umsetzt.

Die erfindungsgemäßen Katalysatoren der Formel I zeichnen sich durch eine hohe Hydrieraktivität und Enantioselektivität sowohl bei der Hydrierung in Wasser als auch in organischen Lösungsmitteln aus.

Besonders geeignet sind sie aus den eingangs genannten Gründen für die asymmetrische Hydrierung von IV in wäßrigem oder wasserhaltigem Medium. Bei Verwendung von (R,R)-3,4-Bis(diarylphosphino)-pyrrolidin-Rh-Komplex entsteht in hohen optischen Ausbeuten das L-Acyl- bzw. L-Alkoxy (L-Aryloxy)-Ptc.

Die Hydrierung erfolgt vorteilhaft in Wasser oder einem Gemisch Wasser/Alkohol (z.B. Methanol oder Ethanol). Die Substratkonzentration kann von einer 0,01 molaren bis zu einer an Substrat übersättigten Lösung reichen. Der Wasserstoffdruck kann zwischen Normaldruck und etwa 80 bar liegen, vorzugsweise zwischen 20 und 50 bar, die Reaktionstemperatur zwischen 0 und +70°C, vorzugsweise zwischen 30 und 50°C. Die Verbindungen der Formel I und IV werden zweckmäßig in solchen Mengen eingesetzt, daß das Molverhältnis von Substrat zu Katalysator möglichst groß ist, es kann bis zu 30000 : 1 betragen. Das Optimum liegt bei einem Verhältnis von ca. 10 - 15000 : 1. Demgegenüber sind bei Verwendung von Methanol als Lösungsmittel Molverhältnisse von maximal 3000 : 1 erreichbar.

Die erfindungsgemäßen Katalysatoren können auch in alkoholischer Phase mit Erfolg angewendet werden, doch bieten sie hier im allgemeinen keine Vorteile gegenüber den aus DE-OS 36 09 818 bekannten Katalysatoren. Gleiches gilt für ihre Verwendung bei der asymmetrischen Hydrierung anderer ungesättigter acylierter Aminosäuren vom Typ der α-Aminoacrylsäuren,

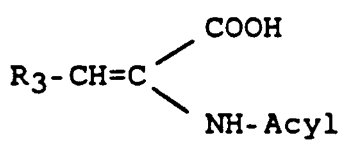

Wegen der Empfindlichkeit der optisch aktiven 3,4-Bis-(diarylphosphino)pyrrolidine und der sie als chirale Liganden enthaltenen erfindungsgemäßen Rhodiumkomplexe gegenüber Sauerstoff ist es zweckmäßig, alle Reaktionen in Schutzgasatmosphäre, z.B. unter Stickstoff oder Argon, durchzuführen und auch die Reaktionsprodukte unter Schutzgas aufzubewahren. Außerdem ist es empfehlenswert, auch die Hydrierungen unter anaeroben Bedingungen vorzunehmen.

Die nachfolgenden Beispiele sollen die Erfindung näher erläutern, ohne daß damit eine Einschränkung beabsichtigt ist.

**Beispiel 1:**

Herstellung von (3R,4R)-3,4-Bis(di-p-tolylphosphino)pyrrolidin

33,15 g (0.155 Mol) Di-p-tolylphosphan und 3,56 g (0.155 Mol) Natrium werden in 150 ml THF so lange unter Rückfluß erhitzt, bis alles Natrium gelöst ist (ca. 6 h). Das THF wird abgezogen, der Rückstand in 160 ml wasserfreiem DMF aufgenommen, auf -20 °C abgekühlt und auf einmal mit 13,6 g (40 mMol) (3S,4S)-3,4-Bis(methansulfonyl)pyrrolidiniumbromid (hergestellt nach EP-OS 151 282) versetzt. Es wird noch eine Stunde bei dieser Temperatur gerührt, dann über Nacht in den Kühlschrank gestellt. Das Lösungsmittel wird im Vakuum abgezogen, der tiefrote Rückstand zwischen 140 ml Wasser und 140 ml Diethylether verteilt, die Wasserphase noch einmal mit 70 ml Diethylether extrahiert, die vereinigten Etherphasen mit 160 ml 1 N HCl-Lösung versetzt und 3 h gerührt. Der abgeschiedene Festkörper wird abgesaugt, mit 50 ml Wasser und 100 ml Diethylether nachgewaschen und zwischen 150 ml Toluol und 60 ml 1 N Natronlauge verteilt. Die organische Phase wird über $Na_2SO_4$ getrocknet, auf ca. 20 ml eingeengt und das Produkt mit 150 ml Hexan ausgefällt. Ausbeute: 10.9 g (55 % der Theorie). Schmelzpunkt: 74-76 °C.
$[\alpha]_D^{RT}$ = +106 ° (c = 0,7; Toluol)
$^{31}$P-NMR ($CDCl_3$) δ (ppm): -8,2, s

**Beispiel 2:**

Herstellung des Polyethylenglykol (MG 10.000)-Derivates von [((3R,4R)-3,4-Bis-(diphenylphosphino)-pyrrolidin)(COD)Rh]$BF_4$

In einem getrockneten 500 ml-Kolben werden 10 g (1 mMol) Polyethylenglykol (MG 10.000) in 260 g absolutem Dioxan gelöst. Zur Entfernung von Wasserspuren aus dem Polyethylenglykol werden 60 g Dioxan abdestilliert. Nach Abkühlen auf Raumtemperatur werden 0,37 g (2,1 mMol) 2,4-Toluylen-diisocyanat zugegeben, dann über Nacht gerührt. 42 g der Lösung werden zur Titration auf Isocyanat entnommen. Es ergibt sich für die Restlösung ein Gehalt von 1,36 mMol Isocyanat. Es werden 0,53 g (1,2 mMol) (3R,4R)-3,4-Bis-(diphenylphosphino)pyrrolidin (hergestellt nach EP-OS 151 282) zugegeben, 2 h gerührt, dann 15 ml Methanol und nach weiteren 15 min 0,41 g (1 mMol) $[Rh(COD)_2]BF_4$ zugegeben. Nach Rühren über Nacht wird im Vakuum auf ca. 40 ml eingeengt und das Produkt durch Zugabe von 200 ml Hexan gefällt. Nach Absaugen und Trocknen im Hochvakuum erhält man 9,1 g (99 % der Theorie) des hellgelben Produktes vom Schmelzpunkt 52-55 °C.
Mittleres Molekulargewicht bezogen auf Rhodium: 9.100

**Beispiel 3:**

Herstellung des Polyethylenglykol-(MG 10.000)-Derivates von [((3R,4R)-3,4-Bis-(di-p-tolylphosphino)-pyrrolidin)(COD)Rh]$BF_4$

Analog Beispiel 2 werden 10 g (1 mMol) Polyethylenglykol (MG 10.000) und 0,37 g (2,1 mMol) 2,4-Toluylendiisocyanat zur Reaktion gebracht. Nach Rühren über Nacht werden 20% des Ansatzes zur Titration auf Isocyanat entnommen. Es ergibt sich für die Restlösung ein Gehalt von 1,52 mMol Isocyanat. Es werden 0,65 g (1,3 mMol) des nach Beispiel 1 hergestellten (3R,4R)-3,4-Bis(di-p-tolylphosphino)-pyrrolidin zugegeben, 2 h gerührt, dann 15 ml Methanol und nach weiteren 15 min 0,45 g (1,1 mMol) $[Rh(COD)_2]BF_4$ zugegeben. Nach Rühren über Nacht wird im Vakuum auf ca. 40 ml eingeengt und das Produkt durch Zugabe von 200 ml Hexan gefällt. Nach Absaugen und Trocknen im Hochvakuum erhält man 9,3 g (100 % der Theorie ) des hellgelben Produktes vom Schmelzpunkt 53-55 °C.
Mittleres Molekulargewicht bezogen auf Rhodium: 8.400.

**Beispiel 4:**

Herstellung des Polyethylenglykolmonomethylether (MG 5.000)-Derivates von [((3R,4R)-3,4-Bis-(tolylphosphino)pyrrolidin)(COD)Rh]$BF_4$

Analog Beispiel 2 werden 10 g (2 mMol) Polyethylenglykolmonomethylether (MG 5.000) und 0,37 g (2,1 mMol) 2,4-Toluylendiisocyanat zur Reaktion gebracht. Nach Rühren über Nacht werden 20% des Ansatzes zur Titration auf Isocyanat entnommen. Es ergibt sich für die Restlösung ein Gehalt von 1,4 mMol Isocyanat. Es werden 0,59 g (1,2 mMol) des nach Beispiel 1 hergestellten (3R,4R)-3,4-Bis(di-p-tolylphosphino)-pyrrolidin zugegeben, 2 h gerührt, dann 15 ml Methanol und nach weiteren 15 min 0,41 g (1 mMol) [Rh-$(COD)_2$]$BF_4$ zugegeben. Nach Rühren über Nacht wird im Vakuum auf ca. 40 ml eingeengt und das Produkt durch Zugabe von 200 ml Hexan gefällt. Nach Absaugen und Trocknen im Hochvakuum erhält man 8,9 g (97 % der Theorie ) des hellgelben Produktes vom Schmelzpunkt 55,5-58 °C.
Mittleres Molekulargewicht bezogen auf Rhodium 9.200.

**Beispiel 5:**

Herstellung des Polyethylenglykol (MG 350)-monomethylether-Derivates von [((3R,4R)-3,4-Bis-(diphenylphosphino)pyrrolidine)(COD)Rh]$BF_4$

1,05 g (3 mMol) Polyethylenglykol (MG 350)-monomethylether werden 2 h bei 40 °C im Hochvakuum getrocknet, dann in 40 ml absolutem Dioxan aufgenommen und zur Entfernung letzter Wasserspuren 10 ml Dioxan abdestilliert. Es werden 0,52 g (3 mMol) 2,4-Toluylendiisocyanat zugegeben und über Nacht gerührt. 20 % des Ansatzes werden zur Titration auf Isocyanat entnommen. Es ergibt sich für die Restlösung ein Gehalt von 2 mMol Isocyanat. Es werden 0,79 g (1,8 mMol) (3R,4R)-3,4-Bis-(diphenylphosphino)pyrrolidin (hergestellt nach EP-OS 151 282) zugegeben, 2 h gerührt, dann 5 ml Methanol und nach weiteren 15 min 0,67 g (1,65 mMol) [Rh$(COD)_2$]$BF_4$ zugegeben. Nach Rühren über Nacht wird das Lösungsmittel abgezogen und der Rückstand im Hochvakuum getrocknet. Ausbeute: 2,49 g (98 % der Theorie) hellgelbes Produkt vom Schmelzpunkt 81-85 °C.
Mittleres Molekulargewicht bezogen auf Rhodium: 1.550.

**Beispiel 6:**

Hydrierungen mit dem nach Beispiel 2 hergestellten Rhodiumkomplex

a)
Zu einer entgasten Lösung von 17,6 g N-Acetyl-2,3-dehydrophosphinothricin (Δ-Ac-Ptc, hergestellt nach DE-OS 36 09 818) in 50 ml Wasser werden unter Schutzgas 66 mg des Rhodiumkomplexes gelöst. Diese Lösung wird unter $N_2$-Gegenstrom in einen 200 ml Edelstahlautoklaven mit Glaseinsatz und Magnetrührer gefüllt, der vorher mittels $N_2$ von Sauerstoff befreit wurde. Nach Durchspülen mit $H_2$ wird $H_2$ bis zu einem Druck von 50 bar aufgepreßt, der Autoklav auf 50 °C erwärmt und der Rührer in Gang gesetzt. Nach 18 h ist die $H_2$-Aufnahme beendet und der Druck auf 34 bar gefallen. Der Autoklav wird entspannt und entleert. Durch Zugabe einer äquivalenten Menge konzentrierter Salzsäure zur Reaktionslösung wird eine 6 N salzsaure Lösung hergestellt, die 8 h unter Rückfluß erhitzt wird. Die Lösung wird eingeengt, der Rückstand mit 40 ml Ethanol aufgekocht, um die Katalysatorbestandteile zu lösen, dann abgesaugt, mit 15 ml Ethanol nachgewaschen und getrocknet.
Umsatz: 100 %.
Ausbeute an L-Phosphinothricinhydrochlorid 16,5 g (95,3 % der Theorie). Schmelzpunkt: 194-197 °C (Zers.). $[\alpha]_D^{22}$ = +23,2 ° (c = 1; 1 N HCl). Dies entspricht einer optischen Ausbeute von 89,9 % bezogen auf $[\alpha]_D^{22}$ = + 25,8 ° (c = 1; 1 N HCl) für optisch reines L-Phosphinothricinhydrochlorid (DE-OS 3 609 818).
b) Vergleich
Analog Beispiel 6a werden in 50 ml einer mit 4,4 g Δ-Ac-Ptc gesättigten methanolischen Lösung 73 mg des Rhodiumkomplexes gelöst und bei 30 °C unter einem $H_2$-Anfangsdruck von 30 bar hydriert. Nach 2 h ist die $H_2$-Aufnahme beendet. Der Autoklav wird entspannt, die Reaktionslösung eingeengt und der Rückstand in 6 N Salzsäure aufgenommen. Die weitere Aufarbeitung erfolgt analog Beispiel 6a. Umsatz 100 %. Ausbeute an L-Phosphinothricinhydrochlorid 4,0 g (92,4 % der Theorie); $[\alpha]_D^{22}$ = +23,3 ° (c = 1; 1 N HCl) entsprechend einer optischen Ausbeute von 90,3 %.

c)
Bei einer Einsatzmenge von 8,8 g Δ-Ac-Ptc und 73 mg des
Rhodiumkomplexes in 50 ml Wasser unter einem $H_2$-Anfangsdruck 50 bar bei 30 °C ist die Hydrierung nach 8 h beendet. Man erhält 8,1 g (93,5 % der Theorie) L-Phosphinothricinhydrochlorid mit einem Drehwinkel $[\alpha]_D^{22}$ = +23,0 ° (c = 1; 1 N HCl) entsprechend einer optischen Ausbeute von 89,1 %.

**Beispiel 7:**

Hydrierungen mit dem nach Beispiel 3 hergestellten Rhodiumkomplex

a)
Analog Beispiel 6 werden 8,8 g Δ-Ac-Ptc und 67 mg des Rhodiumkomplexes in 50 ml Wasser bei 30 °C unter einem $H_2$-Anfangsdruck von 50 bar hydriert. Nach 8 h ist die $H_2$-Aufnahme beendet. Man erhält 8,0 g (92,4 % der Theorie) L-Phosphinothricinhydrochlorid mit einem Drehwert $[\alpha]_D^{22}$ = +22,4 ° (c = 1; 1 N HCl) entsprechend einer optischen Ausbeute von 86,8 %.
b) Vergleich
Die Hydrierung einer gesättigten Lösung von 4,4 g Δ-Ac-Ptc, und 67 mg des Rhodiumkomplexes in 50 ml Methanol bei 30 °C unter einem $H_2$-Anfangsdruck von 35 bar ergibt nach 1,5 h 3,9 g (90,1 % der Theorie) L-Phosphinothricinhydrochlorid mit einem Drehwert von $[\alpha]_D^{22}$ = +23,2 ° (c = 1; 1 N HCl) entsprechend einer optischen Ausbeute von 89,9 %.

**Beispiel 8:**

Hydrierungen mit dem nach Beispiel 4 hergestellten Rhodiumkomplex

a)
Analog Beispiel 6 werden 8,8 g Δ-Ac-Ptc und 74 mg des Rhodiumkomplexes in 50 ml Wasser bei 30 °C unter 35 bar $H_2$-Anfangsdruckhydriert. Nach 3 h ist die $H_2$-Aufnahme beendet. Man erhält 4,0 g (92,4 % der Theorie) L-Phosphinothricinhydrochlorid mit einem Drehwinkel von $[\alpha]_D^{22}$ = +22,3 ° (C = 1; 1 N HCl) entsprechend einer optischen Ausbeute von 86,4 %.
b) Vergleich
Die Hydrierung einer gesättigten Lösung von 4,4 g Δ-Ac-Ptc, in 50 ml Methanol unter Zusatz von 74 mg des Rhodiumkomplexes bei 30 °C unter einem $H_2$-Anfangsdruck von 35 bar ergibt nach 1,5 h 3,9 g (90,1 % der Theorie) L-Phosphinothricinhydrochlorid mit einem Drehwert von $[\alpha]_D^{RT}$ = +23,7 ° (c = 1; 1 N HCl) entsprechend einer optischen Ausbeute von 91,9 %.

**Patentansprüche**
**Patentansprüche für folgende Vertragsstaaten : AT, BE, CH, DE, FR, GB, IT, LI, NL**

**1.** Rhodiumkomplexe der allgemeinen Formel

$[A - O - (CH_2CH_2O)_n - A]^{2+}\ 2\ X^-$ Ia

und

$[A - O - (CH_2CH_2O)_m - CH_3]^+\ X^-$ Ib

worin
n = 5-1000,
m = 5 - 250,
$X^-$ ein Tetrafluoroborat-, Hexafluorophosphat- oder Perchloratanion,
A einen Rest der Formel

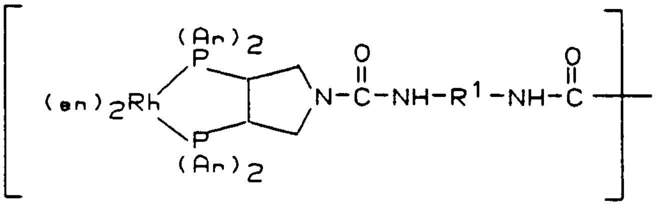 I I

| | |
|---|---|
| $(en)_2$ | zwei Moleküle eines Monoolefins oder ein Molekül eines Diolefins |
| Ar | Phenyl oder durch ein oder zwei Alkylgruppen mit 1 bis 2 Kohlenstoffatomen substituiertes Phenyl und |
| $R^1$ | eine Arylen- oder Alkylenbrücke |

bedeuten.

2. Rhodiumkomplex der Formel Ia nach Anspruch 1, dadurch gekennzeichnet, daß n 50 bis 250 entsprechend einem mittleren Molekulargewicht von 2000 bis 11000 ist.

3. Rhodiumkomplex der Formel Ib nach Anspruch 1, dadurch gekennzeichnet, daß m 50 bis 150 entsprechend einem mittleren Molekulargewicht von 2000 bis 6000 ist.

4. Rhodiumkomplexe nach mindestens einem der Ansprüche 1 bis 3, dadurch gekennzeichnet, daß $R^1$ der divalente Alkylen- bzw. Arylenrest eines Diisocyanats aus der Gruppe Hexamethylendiisocyanat, Isophorondiisocyanat, Diphenylmethandiisocyanat und 2,4-Toluylendiisocyanat ist.

5. Rhodiumkomplexe nach Anspruch 4, worin $R^1$ 2,4-Toluylendiisocyanat ist.

6. Verfahren zur Herstellung von Rhodiumkomplexen der nach Anspruch 1 definierten Formeln Ia und Ib, dadurch gekennzeichnet, daß man ein Polyglykol der Formel $HO\text{-}(CH_2CH_2O)_n\text{-}H$ bzw. einen Polyglykolmonomethylether der Formel $HO\text{-}(CH_2CH_2O)_m\text{-}CH_3$ mit einem Diisocyanat der Formel $R_1(N=C=O)_2$ umsetzt, das erhaltene Additionsprodukt mit einem 3,4 Bis(diarylphosphino)pyrrolidin der Formel

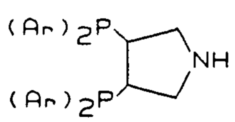 V

derivatisiert und das Reaktionsprodukt mit einem Rhodiumkomplex der Formel

$[Rh(en)_2Y]_2$ VI

(Y = Cl, Br oder J)
und einem Alkalimetall- oder Silbersalz der Tetrafluoroborsäure, Hexafluorophosphorsäure oder Perchlorsäure umsetzt.

7. Verfahren zur Herstellung von Rhodiumkomplexen der nach Anspruch 1 definierten Formeln Ia und Ib, dadurch gekennzeichnet, daß man ein Polyglykol der Formel $HO\text{-}(CH_2CH_2O)_n\text{-}H$ bzw. einen Polyglykolmonomethylether der Formel $HO\text{-}(CH_2CH_2O)_m\text{-}CH_3$ mit einem Diisocyanat der Formel $R_1(N=C=O)_2$ umsetzt, das erhaltene Additionsprodukt mit einem 3,4-Bis(diarylphosphino)pyrrolidin der Formel

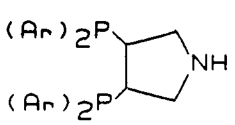 V

derivatisiert und das Reaktionsprodukt mit einem Rhodiumkomplex der Formel

$[Rh(COD)_2]^+BF_4^-$ ,

worin COD 1,5-Cyclooctadien bedeutet, umsetzt.

**8.** Verwendung von mindestens einem der Rhodiumkomplexe der Formeln Ia und Ib nach Anspruch 1 zur Herstellung von L-Phosphinothricin und seiner Derivate durch enantioselektive, katalytische Hydrierung von 2,3-Dehydrophosphinothricin(derivaten).

**9.** Verwendung nach Anspruch 8, dadurch gekennzeichnet, daß die Hydrierung in Wasser oder einem Gemisch Wasser/Alkohol mit einem Molverhältnis von Substrat zu Katalysator bis zu 30000:1 durchgeführt wird.

**10.** Verwendung nach Anspruch 9, dadurch gekennzeichnet, daß das Molverhältnis von Substrat zu Katalysator 10 bis 15000:1 beträgt.

**Patentansprüche für folgenden Vertragsstaat : ES**

**1.** Verfahren zur Herstellung von Rhodiumkomplexen der allgemeinen Formel

$[A - O - (CH_2CH_2O)_n - A]^{2+}\ 2\ X^-$ Ia

und

$[A - O - (CH_2CH_2O)_m - CH_3]^+\ X^-$ Ib

worin
n = 5-1000,
m = 5 - 250,
$X^-$ ein Tetrafluoroborat-, Hexafluorophosphat- oder Perchloratanion,
A einen Rest der Formel

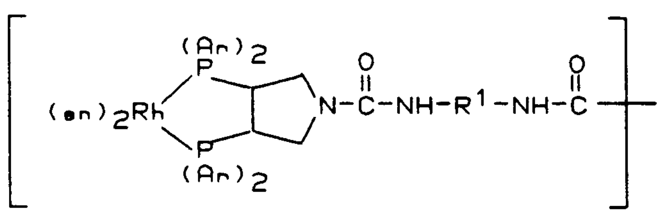

II

$(en)_2$ zwei Moleküle eines Monoolefins oder ein Molekül eines Diolefins
Ar Phenyl oder durch ein oder zwei Alkylgruppen mit 1 bis 2 Kohlenstoffatomen substituiertes Phenyl und
$R^1$ eine Arylen- oder Alkylenbrücke

bedeuten, dadurch gekennzeichnet, daß man ein Polyglykol der Formel $HO-(CH_2CH_2O)_n-H$ bzw. einen Polyglykolmonomethylether der Formel $HO-(CH_2CH_2O)_m-CH_3$ mit einem Diisocyanat der Formel $R_1-(N=C=O)_2$ umsetzt, das erhaltene Additionsprodukt mit einem 3,4-Bis(diarylphosphino)pyrrolidin der Formel

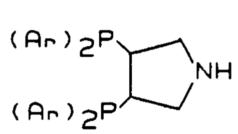

V

derivatisiert und das Reaktionsprodukt mit einem Rhodiumkomplex der Formel

$[Rh(en)_2Y]_2$ IV

(Y = Cl, Br oder J)
und einem Alkalimetall- oder Silbersalz der Tetrafluoroborsäure, Hexafluorophosphorsäure oder Perchlorsäure umsetzt oder das nach Derivatisierung mit der Verbindung der Formel V erhaltene Produkt mit einem Rhodiumkomplex der Formel

$[Rh(COD)_2]^+BF_4^-$ ,

worin COD 1,5-Cyclooctadien bedeutet, umsetzt.

**2.** Rhodiumkomplex der Formel Ia nach Anspruch 1, dadurch gekennzeichnet, daß n 50 bis 250 entsprechend einem mittleren Molekulargewicht von 2000 bis 11000 ist.

**3.** Rhodiumkomplex der Formel Ib nach Anspruch 1, dadurch gekennzeichnet, daß m 50 bis 150 entsprechend einem mittleren Molekulargewicht von 2000 bis 6000 ist.

**4.** Rhodiumkomplexe nach mindestens einem der Ansprüche 1 bis 3, dadurch gekennzeichnet, daß $R^1$ der divalente Alkylen- bzw. Arylenrest eines Diisocyanats aus der Gruppe Hexamethylendiisocyanat, Isophorondiisocyanat, Diphenylmethandiisocyanat und 2,4-Toluidendiisocyanat ist.

**5.** Rhodiumkomplexe nach Anspruch 4, worin $R^1$ 2,4-Toluidendiisocyanat ist.

**6.** Verwendung von mindestens einem der Rhodiumkomplexe der Formeln Ia und Ib nach Anspruch 1 zur Herstellung von L-Phosphinothricin und seiner Derivate durch enantioselektive, katalytische Hydrierung von 2,3-Dehydrophosphinothricin(derivaten).

**7.** Verwendung nach Anspruch 1, dadurch gekennzeichnet, daß die Hydrierung in Wasser oder einem Gemisch Wasser/Alkohol mit einem Molverhältnis von Substrat zu Katalysator bis zu 30000:1 durchgeführt wird.

**8.** Verwendung nach Anspruch 7, dadurch gekennzeichnet, daß das Molverhältnis von Substrat zu Katalysator 10 bis 15000:1 beträgt.

**Claims**
**Claims for the following Contracting States : AT, BE, CH, DE, FR, GB, IT, LI, NL**

**1.** A rhodium complex of the formula

$[A - O - (CH_2CH_2O)_n - A]^{2+}\ 2\ X^-$ Ia

$[A - O - (CH_2CH_2O)_m - CH_3]^+\ X^-$ Ib

or
in which
n = 5 - 1,000,
m = 5 - 250,
$X^-$ denotes a tetrafluoroborate, hexafluorophosphate or perchlorate anion,
A denotes a radical of the formula

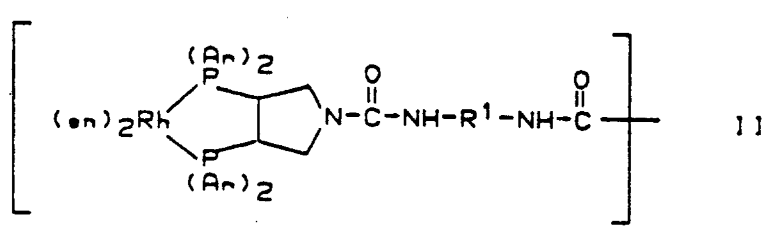

| | |
|---|---|
| $(en)_2$ | denotes two molecules of a monoolefin or one molecule of a diolefin |
| Ar | denotes phenyl or phenyl which is substituted by one or two alkyl groups having 1 or 2 carbon atoms and |
| $R^1$ | denotes an arylene or alkylene bridge. |

2. A rhodium complex of the formula Ia as claimed in claim 1, wherein n is 50 to 250, corresponding to an average molecular weight of 2,000, to 11,000.

3. A rhodium complex of the formula Ib as claimed in claim 1, wherein m is 50 to 150, corresponding to an average molecular weight of 2,000 to 6,000.

4. A rhodium complex as claimed in any one of claims 1 to 3, wherein $R^1$ is the divalent alkylene or arylene radical of a diisocyanate from the group comprising hexamethylene diisocyanate, isophorone diisocyanate, diphenylmethane diisocyanate and 2,4-toluylene diisocyanate.

5. A rhodium complex as claimed in claim 4, in which $R^1$ is 2,4-toluylene diisocyanate.

6. A process for the preparation of a rhodium complex of the formula Ia or Ib as defined in claim 1, which comprises reacting a polyglycol of the formula $HO\text{-}(CH_2CH_2O)_n\text{-}H$ or a polyglycol monomethyl ether of the formula $HO\text{-}(CH_2CH_2O)_m\text{-}CH_3$ with a diisocyanate of the formula $R_1(N=C=O)_2$, derivatizing the resulting addition product with a 3,4-bis(diarylphosphino)pyrrolidine of the formula

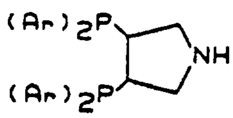 V

and reacting the reaction product with a rhodium complex of the formula

$[Rh(en)_2Y]_2$ VI

(Y = Cl, Br or I)
and an alkali metal salt or silver salt of tetrafluoroboric acid, hexafluorophosphoric acid or perchloric acid.

7. A process for the preparation of a rhodium complex of the formula Ia or Ib as defined in claim 1, which comprises reacting a polyglycol of the formula $HO\text{-}(CH_2CH_2O)_n\text{-}H$ or a polyglycol monomethyl ether of the formula $HO\text{-}(CH_2CH_2O)_m\text{-}CH_3$ with a diisocyanate of the formula $R_1(N=C=O)_2$, derivatizing the resulting addition product with a 3,4-bis(diarylphosphino)pyrrolidine of the formula

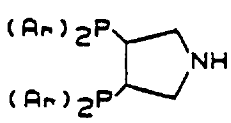 V

and reacting the reaction product with a rhodium complex of the formula

$[Rh(COD)_2]^+BF_4^-$ ,

in which COD denotes 1,5-cyclooctadiene.

8. The use of at least one of the rhodium complexes of the formulae Ia and Ib as claimed in claim 1 for the preparation of L-phosphinothricin or a derivative thereof by enantioselective catalytic hydrogenation of 2,3-dehydrophosphinothricin or a derivative thereof.

**9.** The use as claimed in claim 8, wherein the hydrogenation is carried out in water or a water/alcohol mixture with a molar ratio of substrate to catalyst of up to 30,000:1.

**10.** The use as claimed in claim 9, wherein the molar ratio of substrate to catalyst is 10 to 15,000:1.

**Claims for the following Contracting State : ES**

**1.** A process for the preparation of a rhodium complex of the formula

$[A - O - (CH_2CH_2O)_n - A]^{2+}\ 2\ X^-$ Ia

or $[A - O - (CH_2CH_2O)_m - CH_3]^+\ X^-$ Ib

in which

n = 5 - 1,000,
m = 5 - 250,
$X^-$ denotes a tetrafluoroborate, hexafluorophosphate or perchlorate anion,
A denotes a radical of the formula

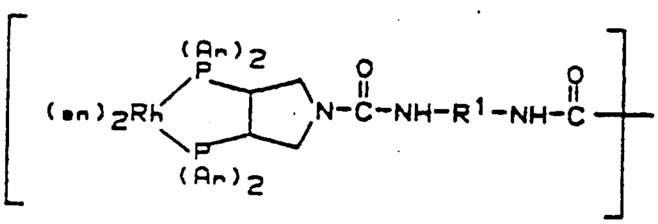

II

$(en)_2$ denotes two molecules of a monoolefin or one molecule of a diolefin
Ar denotes phenyl or phenyl which is substituted by one or two alkyl groups having 1 or 2 carbon atoms and
$R^1$ denotes an arylene or alkylene bridge, which comprises reacting a polyglycol of the formula $HO-(CH_2CH_2O)_n-H$ or a polyglycol monomethyl ether of the formula $HO-(CH_2CH_2O)_m-CH_3$ with a diisocyanate of the formula $R_1(N=C=O)_2$, derivatizing the resulting addition product with a 3,4-bis(diarylphosphino)pyrrolidine of the formula

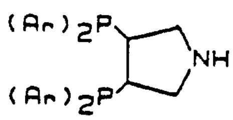

V

and reacting the reaction product with a rhodium complex of the formula

$[Rh(en)_2Y]_2$ IV

(Y = Cl, Br or I)
and an alkali metal salt or silver salt of tetrafluoroboric acid, hexafluorophosphoric acid or perchloric acid or reacting the product obtained after derivatization with the compound of the formula V with a rhodium complex of the formula

$[Rh(COD)_2]^+BF_4^-$

in which COD denotes 1,5-cyclooctadiene.

**2.** A rhodium complex of the formula Ia as in claim 1, wherein n is 50 to 250, corresponding to an average molecular weight of 2,000 to 11,000.

3. A rhodium complex of the formula Ib as in claim 1, wherein m is 50 to 150, corresponding to an average molecular weight of 2,000 to 6,000.

4. A rhodium complex as in any one of claims 1 to 3, wherein $R^1$ is the divalent alkylene or arylene radical of a diisocyanate from the group comprising hexamethylene diisocyanate, isophorone diisocyanate, diphenylmethane diisocyanate and 2,4-toluylene diisocyanate.

5. A rhodium complex as claimed in claim 4, in which $R^1$ is 2,4-toluylene diisocyanate.

6. The use of at least one of the rhodium complexes of the formulae Ia and Ib as in claim 1 for the preparation of L-phosphinothricin or a derivative thereof by enantio-selective catalytic hydrogenation of 2,3-dehydrophosphinothricin or a derivative thereof.

7. The use as claimed in claim 6, wherein the hydrogenation is carried out in water or a mixture of water/alcohol with a molar ratio of substrate to catalyst of up to 30,000:1.

8. The use as claimed in claim 7, wherein the molar ratio of substrate to catalyst is 10 to 15,000:1.

**Revendications**

**Revendications pour les Etats contractants suivants : AT, BE, CH, DE, FR, GB, IT, LI, NL**

1. Complexes de rhodium de formule générale

$[A - O - (CH_2CH_2O)_n - A]^{2+}\ 2\ X^-$ Ia

et

$[A - O - (CH_2CH_2O)_m - CH_3]^+\ X^-$ Ib

où

| | |
|---|---|
| n = | 5-1000, |
| m = | 5-250, |
| $X^-$ | est un anion tétrafluoroborate, hexafluorophosphate ou perchlorate, |
| A | est un reste de formule |

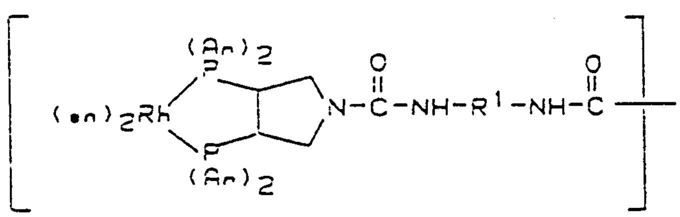

II

où

| | |
|---|---|
| $(en)_2$ | représente deux molécules d'une mono-oléfine ou une molécule d'une dioléfine, |
| Ar | représente le phényle ou un phényle substitué par un ou deux groupes alkyles ayant de 1 à 2 atomes de carbone, et |
| $R^1$ | représente un pont arylène ou alkylène. |

2. Complexe de rhodium de formule Ia, selon la revendication 1, caractérisé en ce que n est de 50 à 250, ce qui correspond à un poids moléculaire moyen de 2000 à 11 000.

3. Complexe de rhodium de formule Ib selon la revendication 1, caractérisé en ce que m est de 50 à 150 ce qui correspond à un poids moléculaire moyen de 2 000 à 6 000.

4. Complexes de rhodium selon au moins une des revendications 1 à 3, caractérisé en ce que $R^1$ est le reste divalent alkylène ou arylène d'un diisocyanate du groupe formé par l'hexaméthylènediisocyanate,

l'isophoronediisocyanate, le diphénylméthanediisocyanate et le 2,4-tolylènediisocyanate.

5. Complexes de rhodium selon la revendication 4, où $R^1$ est le 2,4-tolylènediisocyanate.

6. Procédé pour préparer des complexes de rhodium des formules Ia et Ib définies selon la revendication 1, caractérisé en ce que l'on fait réagir un polyglycol de formule $HO-(CH_2CH_2O)_n-H$ ou un polyglycol-monométhyléther de formule $HO-(CH_2CH_2O)_m-CH_3$ avec un diisocyanate de formule $R_1(N=C=O)_2$, on forme un dérivé du produit d'addition obtenu avec une 3,4-bis(diarylphosphino)pyrrolidine de formule

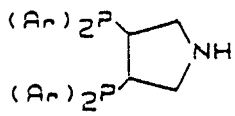

V

et on fait réagir le produit de réaction avec un complexe de rhodium de formule

$[Rh(en)_2Y]_2$ V I

(Y = Cl, Br ou I)
et on fait réagir avec un sel de métal alcalin ou d'argent de l'acide tétrafluoroborique, de l'acide hexafluorophosphorique ou de l'acide perchlorique.

7. Procédé pour préparer des complexes de rhodium des formules Ia et Ib définies selon la revendication 1, caractérisé en ce que l'on fait réagir un polyglycol de formule $HO-(CH_2CH_2O)_n-H$ ou un polyglycol-monométhyléther de formule $HO-(CH_2CH_2O)_m-CH_3$ avec un diisocyanate de formule $R_1(N=C=O)_2$, on forme un dérivé du produit d'addittion obtenu avec une 3,4-bis(diarylphosphino)pyrrolidine de formule

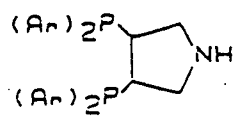

V

et on fait réagir le produit de réaction avec un complexe de rhodium de formule

$[Rh(COD)_2]^+BF_4^-$ ,

où COD représente le 1,5-cyclooctadiène.

8. Utilisation d'au moins un des complexes de rhodium des formules Ia et Ib selon la revendication 1 pour préparer la L-phosphinothricine et ses dérivés par hydrogénation catalytique, énantiosélective, de la 2,3-deshydrophosphinothricine ou de ses dérivés.

9. Utilisation selon la revendication 8, caractérisée en ce que l'hydrogénation est effectuée dans l'eau ou dans un mélange eau/alcool avec un rapport molaire entre le substrat et le catalyseur allant jusqu'à 30 000:1.

10. Utilisation selon la revendication 9, caractérisée en ce que le rapport molaire entre le substrat et le catalyseur est de 10 à 15 000:1.

**Revendications pour l'Etat contractant suivant : ES**

1. Procédé pour préparer des complexes de rhodium de formule générale

$[A - O - (CH_2CH_2O)_n - A]^{2+}\ 2\ X^-$ Ia

et

$[A - O - (CH_2CH_2O)_m - CH_3]^+ X^-$ Ib

où

n = 5-1000,

m = 5-250,

$X^-$ représente un anion tétrafluoroborate, hexafluorophosphate ou perchlorate,

A représente un reste de formule

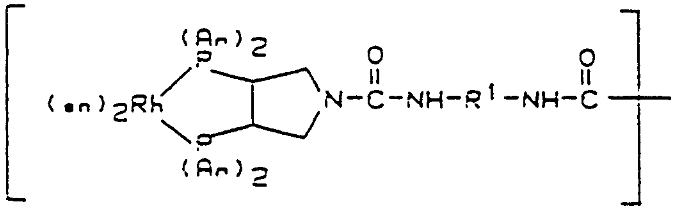

II

où

$(en)_2$ représente deux molécules d'une mono-oléfine ou une molécule d'une dioléfine

Ar représente le phényle ou un phényle substitué par un ou deux groupes alkyles ayant de 1 à 2 atomes de carbone, et

$R^1$ représente un pont arylène ou alkylène caractérisé en ce que l'on fait réagir un polyglycol de formule $HO-(CH_2CH_2O)_n-H$ ou un polyglycolmonométhyléther de formule $HO-(CH_2CH_2O)_m-CH_3$ avec un diisocyanate de formule $R_1(N=C=O)_2$, on fait réagir le produit d'addition obtenu avec une 3,4-bis(diarylphosphino)pyrrolidine de formule

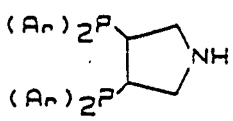

V

et on fait réagir le produit de réaction avec un complexe de rhodium de formule

$[Rh(en)_2Y]_2$ IV

(Y = Cl, Br ou I)

et un sel de métal alcalin ou d'argent de l'acide tétrafluoroborique, de l'acide hexafluorophosphorique ou de l'acide perchlorique, ou on fait réagir le produit dérivé, obtenu avec le composé de formule V, avec un complexe du rhodium de formule

$[RH(COD)_2]^+BF_4^-$ ,

où COD représente le 1,5-cyclooctadiène.

**2.** Complexe de rhodium de formule Ia selon la revendication 1, caractérisé en ce que n est de 50 à 250, ce qui correspond à un poids moléculaire moyen de 2000 à 11 000.

**3.** Complexe de rhodium de formule Ib selon la revendication 1, caractérisé en ce que m est de 50 à 150, ce qui correspond à un poids moléculaire moyen de 2000 à 6000.

**4.** Complexes de rhodium selon au moins une des revendications 1 à 3, caractérisé en ce que $R^1$ représente le reste divalent alkylène ou arylène d'un diisocyanate du groupe formé par l'hexaméthylènediisocyante, l'isophoronediisocyanate, le diphénylméthanediisocyanate et le 2,4-tolylènediisocyanate.

**5.** Complexes de rhodium selon la revendication 4, où $R^1$ est le 2,4-tolylènediisocyanate.

6. Utilisation d'au moins un des complexes de rhodium des formules Ia et Ib selon la revendication 1 pour préparer la L-phosphinothricine et ses dérivés par hydrogénation catalytique, énanthiosélective, de la 2,3-deshydrophosphinothricine ou de ses dérivés.

7. Utilisation selon la revendication 1, caractérisée en ce que l'hydrogénation est réalisée dans de l'eau ou dans un mélange eau/alcool avec un rapport molaire entre le substrat et le catalyseur allant jusqu'à 30 000:1.

8. Utilisation selon la revendication 7, caractérisée en ce que le rapport molaire entre le substrat et le catalyseur s'étend de 10 à 15 000:1.